# EUROPEAN PATENT APPLICATION

(11) **EP 2 874 107 A1**
(43) Date of publication of application: **20.05.2015**
(21) Application number: 13290280.0
(22) Date of filing: 13.11.2013
(51) Int. Cl.: G06Q 10/02, G06F 17/30, G06Q 50/14

(54) **Integration of online self-booking tool and third party system search results**

(71) Applicant: Amadeus S.A.S., 06410 Biot (FR)
(72) Inventor: Lopez Ruiz, Eduardo Rafael, 06200 Golfe Juan (FR); Raphose, Fabrice, 06600 Antibes (FR)
(74) Representative: Samson & Partner Patentanwälte mbB

(57) **Abstract**

Methods, systems, and computer program products for providing functionality of an online self-booking tool to a user who is booking travel offerings through a website of a third party provider. A travel-related search query by the user generates parallel searches in each of a website of a third party provider and a database including travel offerings having negotiated rates. The results of the parallel searches may be captured and combined in a data siphon tool. The data siphon tool may reconcile the combined search results by eliminating duplicate search results and identifying search results that are in conflict with corporate travel policies. The reconciled search results may then be formatted based on display data obtained from the third party website and displayed to the user. Search results conflicting with corporate travel policies may be deleted, or displayed with an indication of the conflict.

## Description

### BACKGROUND

The invention generally relates to computers and computer software, and in particular to methods, systems, and computer program products for integrating online self-booking tool and third party website search results and features for travel-related product offerings.

Employees engaging in business related travel for a corporation or other business entity are typically required to follow corporate travel policies. The creation and enforcement of corporate travel policies is commonly referred to as corporate travel management. Services that may be provided by corporate travel management include negotiations with vendors such as airlines and hotels, day-to-day operation of corporate travel programs, setting of traveler safety policies, and management of travel and expense data for trips taken by employees. These services may be handled internally by a corporate travel department, or may be contracted out to a travel management company. In any case, corporate travel management may set policies regarding the class of service that employees are permitted to book for business travel, negotiate corporate rates with airlines, hotels, and car rental companies, and set policy with regard to what travel products may be purchased when travelling on company business.

Business travelers booking trips are normally required to follow certain corporate guidelines with regard to selection of travel products. To facilitate enforcement of travel-related policies and ensure that travel products are purchased at negotiated corporate rates, companies may prefer that employees book business travel through an internal corporate travel manager or designated travel management company. These bookings may be performed using an online self-booking tool.

Online self-booking tools may be hosted on a corporate or travel management company server, and configured so that employees can remotely log-on. Employees may thereby book travel using a personal computing device connected to the host server over a network, such as a corporate LAN or the Internet. Because the online self-booking tool can control what travel options are displayed to the user, travel polices may be enforced by only displaying travel options that conform to internal travel polices and negotiated corporate rates. The online self-booking tool may also flag travel options that do not conform with internal travel polices or that are otherwise less desirable with visual clues to discouraged the user from selecting these travel options.

Since the advent of the Internet, the travel industry has become increasingly fragmented and complex, with an increasing number of third party providers, such as online travel agents and airlines, launching niche services through online channels. Travelers wishing to purchase a travel product through an online channel may access a website operated by the third party provider. The traveler-will then typically provide search terms to the website in the form of a search query to identify travel products that meet their needs. In response to receiving the search query, the website will search one or more databases to identify travel products that match the parameters of the search query. Matching travel products may then be displayed as part of a travel offering that may be booked or purchased by the traveler.

The availability of online channels for purchasing travel products has greatly increased options for travelers booking a trip, especially with regard to leisure travel. Online channels may also allow users to buy tickets directly from the airline. To encourage this type of purchase, airlines may offer perquisites to encourage direct access through their website. The resulting increased competitiveness of online channels has shifted travel-related purchases away from traditional channels, such as travel management corporations and online self-booking tools, toward online channels. Business travelers accustomed to booking personal travel through online channels may also prefer the convenience and familiarity of a familiar third party website to search for and book business travel or mixed business and leisure travel. In addition, travel options offered by online channels may provide travel products at prices below the corporate negotiated rates in specific instances.

One problem associated with booking business travel through an online channel is that travel offerings booked via an online channel run the risk of violating corporate travel policies or being purchased at a higher rate than the negotiated corporate rate. Additional problems with booking through an online channel may include: (1) an inability to fully determine travel locations, which may create difficulties for corporate travel managers in fulfilling their "duty-of-care" to the company; (2) difficulties tracking booking volumes due to dilution across multiple online channels, which may adversely affect the corporation's ability to justify or negotiate preferred rates with travel providers; and (3) online channels may lack support for payments with the corporate card or other account.

To avoid these problems, business travelers may search for a travel product using a preferred online channel, and then book the desired product through a traditional channel. Because this can be a time-consuming and error prone procedure, travelers may just risk booking the travel product through the online channel, or confine their search to what is available through the traditional channel. In addition, some desired travel products identified by the online channel may not be available through the online self-booking tool, so that determining whether the travel product complies with corporate travel policies is not possible using this method.

Thus, improved systems, methods, and computer program products are needed to search for and book travel products that combine the familiarity and convenience of online channels while providing the policy enforcement and negotiated rates of traditional channels.

### BRIEF SUMMARY

In an embodiment of the invention, a method for furnishing online self-booking tool functionality to a user booking travel offerings through a website is provided. The method includes capturing a search criterion contained in a search query transmitted to the website. A first search is launched at the website and a second search is launched at a database including travel offerings having a negotiated rate. Each of the first and second searches includes the search criterion. A first set of search results from the website and a second set of search results from the database are captured and combined into a third set of search results. A fourth set of search results is generated from the third set of search results by removing duplicate search results, and at least a portion of the fourth set of search results is displayed to the user.

In another embodiment of the invention, a method of enriching search results with content from the website is provided. The method includes receiving the search query at a computer in communication with the online self-booking tool, and identifying a travel offering that satisfies the search query. The computer then determines if the travel offering should be purchased through the website. In response to determining the travel offering should be purchased though the website, the computer establishes a link with the website, and captures content relating to the travel offering transmitted over the link. The computer searches the database for a travel policy of a business entity, the travel policy relating to the content. In response to identifying the travel policy of the business entity, the computer displays the content and the travel policy to the user via the online self-booking tool.

In another embodiment of the invention, an apparatus is provided. The apparatus includes a processor and memory. The memory includes instructions that, when executed by the processor, cause the apparatus to capture the search criterion contained in the search query transmitted to the website. The apparatus then launches the first search including the search criterion at the website and the second search including the search criterion at the database including travel offerings having the negotiated rate. The apparatus captures the first set of search results from the website and the second set of search results from the database, and combines the first and second sets of search results into the third set of search results. The apparatus generates the fourth set of search results from the third set of search results by removing duplicate search results, and displays at least a portion of the fourth set of search results.

In another embodiment of the invention, another apparatus is provided. The apparatus includes the processor in communication with the online self-booking tool and the memory. The memory includes instructions that, when executed by the processor, cause the apparatus to receive the search query and identify the travel offering that satisfies the search query. The apparatus determines whether the travel offering should be purchased through the website. If travel offering should be purchased though the website, the apparatus establishes the link with the website and captures content relating to the travel offering transmitted over the link. The apparatus searches the database for the travel policy of the business entity, the travel policy relating to the content. In response to identifying the travel policy of the business entity, the apparatus displays the content and the travel policy to the user via the online self-booking tool.

In another embodiment of the invention, a computer program product is provided. The computer program product includes a non-transitory computer readable storage medium that stores instructions. The instructions are configured so that, when executed by the processor, they cause the processor to capture the search criterion contained in the search query transmitted to the website. The processor launches the first search at the website and the second search at the database including travel offerings having the negotiated rate, the first and second searches each including the search criterion. The instructions then cause the processor to capture the first set of search results from the website and the second set of search results from the database, and combine the first and second sets of search results into the third set of search results. The processor then generates the fourth set of search results from the third set of search results by removing duplicate search results, and displays at least a portion of the fourth set of search results.

In another embodiment of the invention, another computer program product is provided. The computer program product includes the non-transitory computer readable storage medium that stores instructions. The instructions are configured so that, when executed by the processor, they cause the processor to receive the search query and identify the travel offering that satisfies the search query. The processor determines whether the travel offering should be purchased through the website, and in response to determining the travel offering should be purchased though the website, establishes the link with the website. The processor then captures content relating to the travel offering, the content being transmitted over the link, and searches the database for the travel policy of the business entity relating to the content. In response to identifying the travel policy of the business entity, the processor displays the content and the travel policy of the business entity to the user via an online self-booking tool.

### BRIEF DESCRIPTION OF THE SEVERAL VIEWS OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment including a plurality of computer systems in communication via a network.
FIG. 2 is a diagrammatic view of an exemplary computer system of FIG. 1.
FIG. 3 is a diagrammatic view of a travel booking system that may operate in the exemplary operating environment of FIG. 1.
FIG. 4 is a flow diagram depicting a process for enriching search results that may be performed by the travel booking system of FIG. 3.
FIG. 5 is a flow diagram depicting a process by which a system user is provided with search results enriched by the process depicted in FIG. 4.

### DETAILED DESCRIPTION

Embodiments of the invention are directed to systems and methods for providing users with travel-related search results that include products and services from multiple sources, such as a Global Distribution System (GDS) and a website of a third party provider. Embodiments of the invention may include a travel booking system that enriches search results from the website of the third party provider with content available to an online self-booking tool. In the case where a search is launched in the online self-booking tool, the search results returned by the online self-booking tool may be enriched with third party services and content obtained from the website of the third party provider. Searches launched in the website of the third party provider may trigger a parallel search on one or more GDS databases. The searches may be launched by the user, or transparently in response to user actions.

The travel booking system may receive and combine the search results from the website and the GDS, and filter the combined results to eliminate duplicates. The travel booking system may then identify travel offerings that do not conform to one or more corporate policies of a business entity, or to a user profile criteria. The results may then be displayed to the user with the non-conforming travel offerings either filtered out or marked to indicate that they do not conform to one or more corporate travel policies. Embodiments of the invention may thereby extend the coverage of online self-booking tool services and content to website search results without generating development dependencies in the website.

A search launched in the online self-booking tool may produce travel offerings that contain one or more travel products that are preferably purchased through an online channel. The travel booking system may detect these travel offerings, and launch a search relating to the detected results in a website associated with the online channel. The travel booking system may receive and apply relevant travel policies to the search results, and display the data to the user using the data format of the website. The online self-booking tool search results may thereby be enriched with content from the website that complies with corporate travel policies, or that is labeled as being out of compliance. Embodiments of the invention may thereby provide online self-booking tools with a feature that directly embeds third party provider content and services obtained through the website into the GDS search results. Travel management systems may thereby avoid having to replicate, generalize, and maintain specific services and content offered by online travel agencies, airline websites, meta-search engines, and other third party providers. In addition, the travel booking system may include a profile management feature that applies specific user and/or corporate travel profiles to the search results. The travel booking system may thereby provide value to airlines by customizing results to the specific user requesting the search. In addition, by ensuring that users are purchasing travel products that fall within corporate travel policies, the travel booking system may increase the likelihood users will be reimbursed for expenses related to travel products obtained through online channels. The travel booking system may also enable users to charge travel booked online to a corporate credit card or other account, thereby avoiding the need for reimbursement of online purchases.

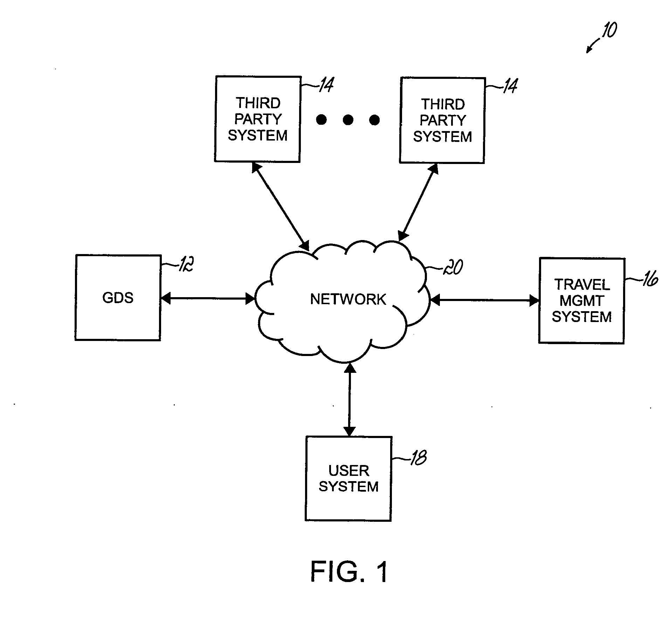

Referring now to FIG. 1, an operating environment 10 in accordance with an embodiment of the invention may include a GDS 12, one or more third party provider systems 14, a travel management system 16, and a user system 18 in communication via a network 20 that includes one or more private and/or public networks (e.g., the Internet) that enable the exchange of data between the systems. In an embodiment of the invention, the travel management system 16 may be integrated with the GDS 12, in which case the features of the travel management system 16 may be provided by the GDS 12.

The GDS 12 may be configured to store and retrieve information, as well as conduct transactions related to air travel, hotels, car rental, or other travel-related products. To this end, the GDS 12 may maintain links with various airline, travel agency, and other service provider systems (not shown) via the network 20. These links may allow the GDS 12 to route reservation requests between the various systems so that flights and other travel products may be booked with multiple service providers via a single connection to the GDS 12.

The third party systems 14 may host a website for an online travel agency, meta-search engine, airline, hotel, or any other third party provider of travel products. The website may be configured to allow travelers to search for and book travel products sold by the third party provider. The third party systems 14 may thereby allow users to search for and book travel products via a suitable software application, such as a web browser, running on the user system 18.

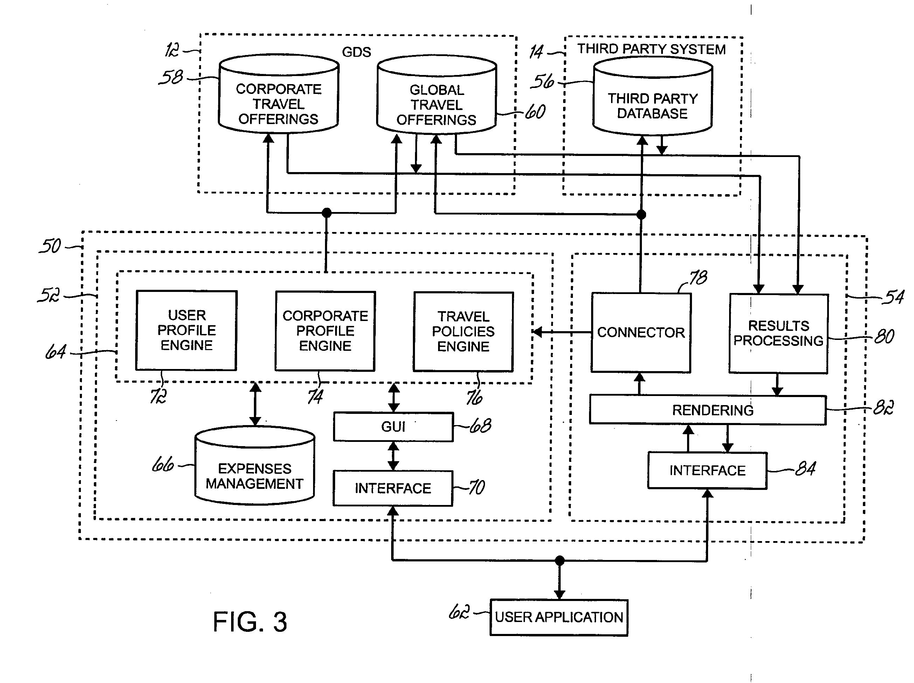

The travel management system 16 may be maintained by a business entity, such as a corporation or travel management company, to manage employee travel. To this end, the travel management system 16 may provide an online self-booking tool 52 (FIG. 3) configured to enable business travelers to create travel itineraries at a single centralized location. The travel management system 16 may thereby provide a centralized location for storing data relating to user and corporate profiles, user and corporate preferences, corporate agreements, and corporate travel policies. The travel management system 16 may also host programs that provide expense management and tracking functions. The user system 18 may be a desktop computer, laptop computer, tablet computer, smart phone, or any other computing device that provides the user with access to the systems 12, 14, 16 connected to the network 20.

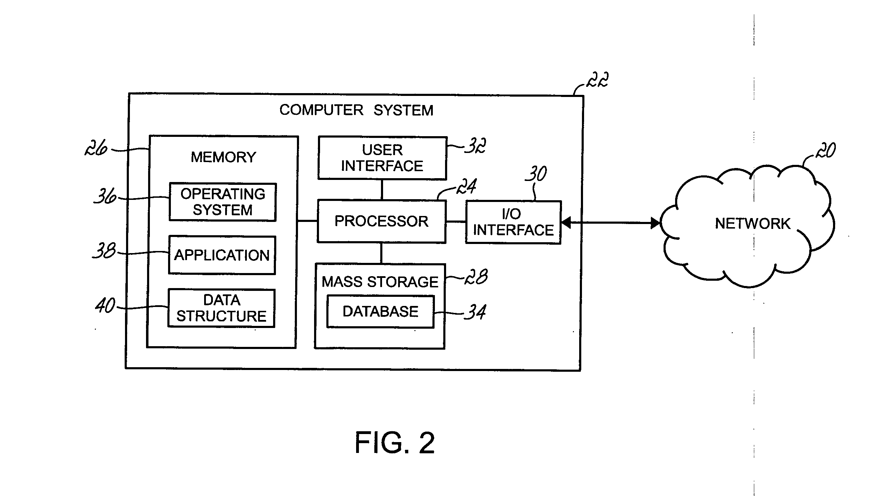

Referring now to FIG. 2, the GDS 12, third party systems 14, travel management system 16, and user system 18 of operating environment 10 may be implemented on one or more computer devices or systems, such as exemplary computer system 22. The computer system 22 may include a processor 24, a memory 26, a mass storage memory device 28, an input/output (I/O) interface 30, and a user interface 32.

The processor 24 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 26. The memory 26 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 28 may include data storage devices such as a hard drive, optical drive, tape drive, non-volatile solid state device, or any other device capable of storing information. A database 34 may reside on the mass storage memory device 28, and may be used to collect and organize data used by the various systems, applications, modules, and tools described herein.

Processor 24 may operate under the control of an operating system 36 that resides in memory 26. The operating system 36 may manage computer resources so that computer program code embodied as one or more computer software applications, such as application 38 residing in memory 26, may have instructions executed by the processor 24. In an alternative embodiment, the processor 24 may execute the applications 38 directly, in which case the operating system 36 may be omitted. One or more data structures 40 may also reside in memory 26, and may be used by the processor 24, operating system 36, and/or application 38 to store or manipulate data.

The I/O interface 30 may provide a machine interface that operatively couples the processor 24 to other devices and systems, such as the network 20. The application 38 may thereby work cooperatively with the network 20 by communicating via the I/O interface 30 to provide the various features, functions, and/or modules comprising embodiments of the invention. The application 38 may also have program code that is executed by one or more external resources (not shown), or otherwise rely on functions and/or signals provided by other system or network components external to the computer system 22. Indeed, given the nearly endless hardware and software configurations possible, persons having ordinary skill in the art will understand that embodiments of the invention may include applications that are located externally to the computer system 22, distributed among multiple-computers or other external resources, or provided by computing resources (hardware and software) that are provided as a service over the network 20, such as a cloud computing service.

The user interface 32 may be operatively coupled to the processor 24 of computer system 22 in a known manner to allow a user to interact directly with the computer system 22. The user interface 32 may include video and/or alphanumeric displays, a touch screen, a speaker, and any other suitable audio, visual, and/or tactile indicators capable of providing information to the user. The user interface 32 may also include input devices and controls such as an alphanumeric keyboard, a pointing device, keypads, pushbuttons, control knobs, microphones, etc., capable of accepting commands or input from the user and transmitting the entered input to the processor 24.

Referring now to FIG. 3, a travel booking system 50 in accordance with an embodiment of the invention may include the online self-booking tool 52, and a data siphon tool 54. The online self-booking tool 52 and data siphon tool 54 may be in communication with a third party provider database 56 of third party system 14, a corporate travel offerings database 58 and a global travel offerings database 60 of GDS 12, and a user application 62. The third party provider database 56 may be configured to be accessed through a website of the third party provider. The user application 62 may be any suitable application, such as a web browser, that allows the user to access the travel booking system 50 via the user system 18.

The third party provider database 56 may include travel offerings provided by a third party provider, such as an airline, online travel agency, or meta-search website. The third party provider database 56 may be searchable based on the characteristics of the travel offerings stored therein. These characteristics may include data describing the travel offering, such as the type of travel product, travel product availability, travel product price, destination and origination cities, flight times and dates, hotel star rating, location, or any other characteristic of the travel offering. The corporate travel offerings database 58 of GDS 12 may include travel offerings specific to a particular business entity (e.g., a corporation), such as flights, hotel rooms, or other travel products having negotiated rates for the purchase. The global travel offerings database 60 of GDS 12 may be a searchable database including all travel offerings that are generally available to the public through the GDS 12, such as travel offerings that do not include negotiated rates. Similarly to the third party provider database 56, the corporate travel offerings database 58 and global travel offerings database 60 may be searchable based on one or more characteristics of the travel offerings.

The online self-booking tool 52 may include a profile module 64, an expenses management database 66, a graphical user interface (GUI) module 68, and an interface module 70. The profile module 64 may be configured to provide centralized management of: (1) profile information, travel preferences, trip and booking information, and travel requests for system users; and (2) travel policies, approval processes, provider preferences, provider agreements, payment and billing information, and communication campaigns for one or more corporate entities. To this end, the profile module 64 may include a user profile engine 72, a corporate profile engine 74, and a travel policies engine 76. The user profile engine 72 may centralize user profile and travel preference data, thereby enabling search results to be tailored to the specific user requesting the search. By way of example, the user profile engine 72 may provide user data indicating whether the user prefers a particular hotel chain, or participates in a particular frequent flyer rewards program. Search queries and/or search results may be adjusted based on this user preference data. Similarly, the corporate profile engine 74 may be configured to provide data relating to corporate profiles, preferences, and agreements with travel service providers. This corporate profile information may include, for example, information relating to a corporate credit card or travel account that enables direct payment for booked travel by the corporation. The travel policies engine 76 may be configured to provide data that defines corporate policies that apply to the user's business travel. The data provided by the corporate profile engine 74 and the travel policies engine may be used to modify search queries and/or search results so that the search results reflect the corporate profile and policies of the corporation the user is associated with.

The expenses management database 66 of online self-booking tool 52 may be configured to store and maintain data relating to user travel expenses. To this end, data relating to travel charges incurred by the user, such as from booking travel products, as well as payments made to travel product providers, may be stored in the expenses management database 66. This data may then be used to generate expense reports for the user, to track corporate travel expenses, to provide accounting with information regarding corporate travel budgets, or for any other suitable purpose.

The GUI module 68 of online self-booking tool 52 may be configured to transmit data to and receive data from the interface module 70 of online self-booking tool 52. The GUI module 68 may receive data from the user application 62 via the interface module 70 and format this data for use by the online self-booking tool 52. The GUI module 68 may also receive data generated by the online self-booking tool 52 and format this data for presentation to the user. In any case, data exchanged between the GUI module 68 and the GDS 12 may pass through the profile module 64 so that search queries and results may be modified based on user and corporate profiles and preferences as discussed above. The interface module 70 of online self-booking tool 52 may be an Application Program Interface (API) that enables the user application 62 to communicate with the GUI module 68 via an online self-booking tool channel.

The data siphon tool 54 may include a connector module 78, a results processing module 80, a rendering module 82, and an interface module 84. The interface module 84 of data siphon tool 54 may provide an API through which the user application 62 can communicate with the rendering module 82. The interface module 84 may be configured to provide access to one or more online channels by enabling the user application 62 to communicate with third party websites via the data siphon tool 54.

The connector module 78 of data siphon tool 54 may be configured to receive data relating user actions received from the rendering module 82 of data siphon tool 54. In response to receiving this data, the connector module 78 may transmit data to the profile module 64 of online self-booking tool 52, the global travel offerings database 60 of GDS 12, and the third party provider database 56 of third party system 14. This transmitted data may define search queries and other commands or triggers that cause the online self-booking tool 52, the third party provider database 56, and the global travel offerings database 60 to perform functions relating to searching for and booking travel products. The connector module 78 may also be configured to transmit keepalive signals at suitable intervals to maintain links with the third party system 14 and/or online self-booking tool 52.

In response to receiving search query data from the connector module 78 of data siphon tool 54, the profile module 64 of online self-booking tool 52 may generate one or more search queries. These search queries may be based on the received search query data, and may further include data added by the profile module 64 such as: (1) user profile data provided by the user profile engine 72, (2) corporate profile, preference and agreement data provided by the corporate profile engine 74, and (3) corporate travel policy data provided by the travel policies engine 76. When the profile module 64 has finished-generating the one or more search queries, the profile module 64 may transmit the one or more queries to the corporate travel offerings database 58 and the global travel offering database of GDS 12.

The results processing module 80 of data siphon tool 54 may be configured to receive search result data from the third party provider database 56 of third party system 14, and the corporate and global travel offerings databases 58, 60 of GDS 12. The results processing module 80 may merge this search result data and remove duplicate travel offerings. The results processing module 80 may then reconcile the policy compliance status, guidance, and display settings of each of the travel offerings in the received search results by flagging or deleting travel offerings that do not comply with the settings. The results processing module 80 may then provide the reconciled search results to the rendering module 82 of data siphon tool 54 for further processing.

The rendering module 82 may be configured to format the reconciled search results provided via the results processing module 80 so that the enriched third party data is displayed by the user application 62 with a similar look and feel as would be provided by the website of the third party provider. The displayed user interface may be generated by the rendering module 82, or the rendering module 82 may simply add or inject specific content into the displayed user interface that is natively rendered by the website. The rendering module 82 may thereby preserve the user experience provided to users directly accessing the website of the third party provider. The rendering module 82 may also track and prompt user actions during the booking process, as well as during any pre-trip and post-trip activities.

The tools, modules, and databases comprising the travel booking system 50 may be hosted on one or more of the GDS 12, travel management system 16, and/or user system 18. In an embodiment of the invention, connector module 78, results processing module 80, rendering module 82, and interface module 84 of data siphon tool 54 may comprise one or more plug-in extensions for a web browser application running on the user system 18. The online self-booking tool 52 may be provided by an application hosted on the travel management system 16, which may be a corporate server or a server maintained by a travel management company. In an embodiment of the invention, the travel management system 16 may be hosted or otherwise provided by the GDS 12.

Embodiments of the invention may extend management of corporate travel purchases to include online channels, such as online travel agency websites, meta-search websites, airline websites, hotel websites, car rental websites, or any other suitable service website. This may be accomplished by selectively capturing data relating to travel offerings displayed by the website, and enriching this data with the corporate policies and agreements provided by the travel booking system 50.

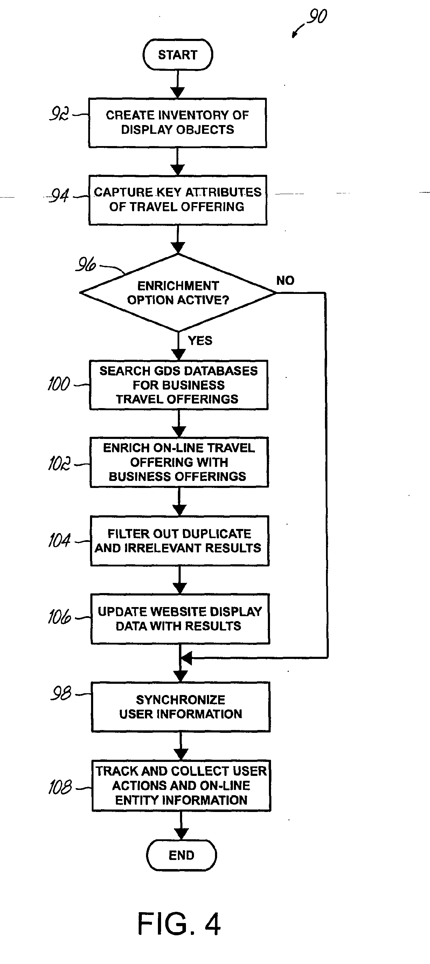

Referring now to FIG. 4, a flow chart illustrates a process 90 for booking travel offerings in accordance with an embodiment of the invention. In block 92, the travel booking system 50 may create an inventory of display objects associated with an online channel website on which a search query is being executed. These display objects may include text, images, templates, code (e.g., hypertext markup language (HTML) code), or any other data objects that define what is displayed by the online channel website. The inventory of display objects may be stored as a plurality of data structures 40 in memory 26 of travel management system 16 or user system 18. The inventory of display objects may also be stored in the database 34 residing on the mass storage device of travel management system 16 or user system 18. In any case, the inventory of display objects may improve the ability of the travel booking system 50 to interact with content and services received from the online channel website.

In block 94, the travel booking system 50 identifies and captures key attributes of a travel offering displayed by the online channel website. The identified attributes may be captured, for example, using web-scraping methods. Key attributes may include a unique identifier or a price of a travel product included in the travel offering. Exemplary key attributes may include a flight number and ticket price for a flight between an origination and destination city pair.

In block 96, the travel booking system 50 may determine if data received from the online channel website is to be enriched. This determination may be made, for example, based on whether an enrichment feature has been activated in the travel booking system 50. The enrichment option may be set by the user, based on search terms such as the type of travel products being sought, based on the identity of the online channel, or for any other suitable reason. The state of the enrichment option may also be selected based on user or corporate profile data provided by the profile module 64 of online self-booking tool 52. In any case, in response to the enrichment option being inactive ("NO" branch of decision block 96), the travel booking system 50 may proceed to block 98. In response to the enrichment option being active ("YES" branch of decision block 96), the travel booking system 50 may proceed-to block 100 and begin the process of enriching the search results provided by the online channel website.

In block 100, the travel booking system 50 may search one or more of the corporate travel offerings database 58 and global travel offerings database 60 of GDS 12. This search may be for travel offerings that satisfy the search parameters used to search the online channel website. To this end, the connector module 78 of data siphon tool 54 may transmit data to the profile module 64 of online self-booking tool 52. This data may include parameters or search terms received from the user application 62. In response to receiving the data, the profile module 64 may obtain user profile data using the user profile engine 72, data relating to corporate profile, policies, preferences, and agreements using the corporate profile engine 74, and corporate travel policies using the travel policies engine 76. The profile module 64 may then generate one or more database queries based on the data received from the connector module 78 as well as the data provided by the user profile engine 72, corporate profile engine 74, and corporate travel policies engine 76. The online self-booking tool 52 may transmit the one or more search queries to the GDS 12. In response to receiving the search queries, the GDS 12 may search the corporate travel offerings database 58 and/or global travel offerings database 60 for travel offerings that satisfy the search query. Travel offerings that satisfy the search query may be transmitted to the results processing module 80 of data siphon tool 54.

In response to receiving the search results from the corporate travel offerings database 58 and the global travel offerings database 60 at the results processing module 80, the travel booking system 50 may proceed to block 102. In block 102, the results processing module 80 may combine the search results received from the GDS 12 with the search results received from the online channel website. The search results received from the online channel website may have been obtained by querying the third party provider database 56. The travel booking system 50 may thereby enrich the search results received from the online channel website with travel offerings obtained from the GDS 12 before proceeding to block 104.

In block 104, the results processing module 80 may remove duplicate travel offerings and irrelevant or incompatible travel offerings from the search results. Irrelevant travel offerings may include, for example, travel offerings that do not comply with corporate travel policies or with user preferences. The remaining travel offerings may then be transmitted to the rendering module 82. In an alternative embodiment of the invention, rather than removing irrelevant travel offerings from the search results, the irrelevant travel offerings may be flagged to identity a reason that each is not relevant and then transmitted to the rendering module 82 along with the relevant travel offerings.

In block 106, the rendering module 82 may update the online channel website display data to include any additional travel offerings added to the search results by the results processing module 80. The rendering module 82 may thereby generate display data that combines the travel offerings from the GDS 12 and the online channel website to create an integrated display. The resulting integrated display may include additional business offerings, policy status information, and compliance guidance. Examples of compliance guidance may include flags or other indicia indicating whether a displayed travel offering complies with corporate travel policies. The rendering module 82 may also redirect booking flow, implement new display settings, remove irrelevant results, or otherwise alter what is displayed to the user. The resulting display data may then be transmitted to the user application 62 via the interface module 84.

In block 98, the travel booking system 50 may synchronize user information. This synchronization may occur, for example, in response to the user booking a displayed travel offering. In response to the user booking the travel offering, purchase and expense information may be transmitted to the expenses management database 66 of online self-booking tool 52. In block 108, this data may be associated with the user in the expenses management database 66. The travel booking system 50 may thereby track expenses for multiple travel offerings booked through different channels by the same user based on data stored in the expenses management database 66.

The process 90 may be terminated at any point in the process flow based on corporate preferences. In response to the process 90 being terminated, the user may be redirected to a relevant booking process flow in the online self-booking tool 52. That is, the booking process may continue without the added features provided by the data siphon tool 54. In this case, the redirection may be contextualized using the user interactions captured from the online channel website. For example, the user may be redirected to a travel offering availability page in which the relevant search has already been performed.

In operation, the user may begin their search for travel offerings that satisfy an itinerary by activating the user application 62, which may be a web browser running on the-user system 18. In an embodiment of the invention, the browser may include plug-in extensions that provide the data siphon tool 54 of travel booking system 50. The user may then navigate the user application 62 to the online channel website, which may be hosted by the third party system 14, or to the online self-booking tool 52 of travel booking system 50. In an embodiment of the invention, the online self-booking tool 52 may be hosted on the travel management system 16. In the case where the user application 62 is in communication with the online channel website, data exchanged between the user application and the website may pass through or be monitored by the data siphon tool 54.

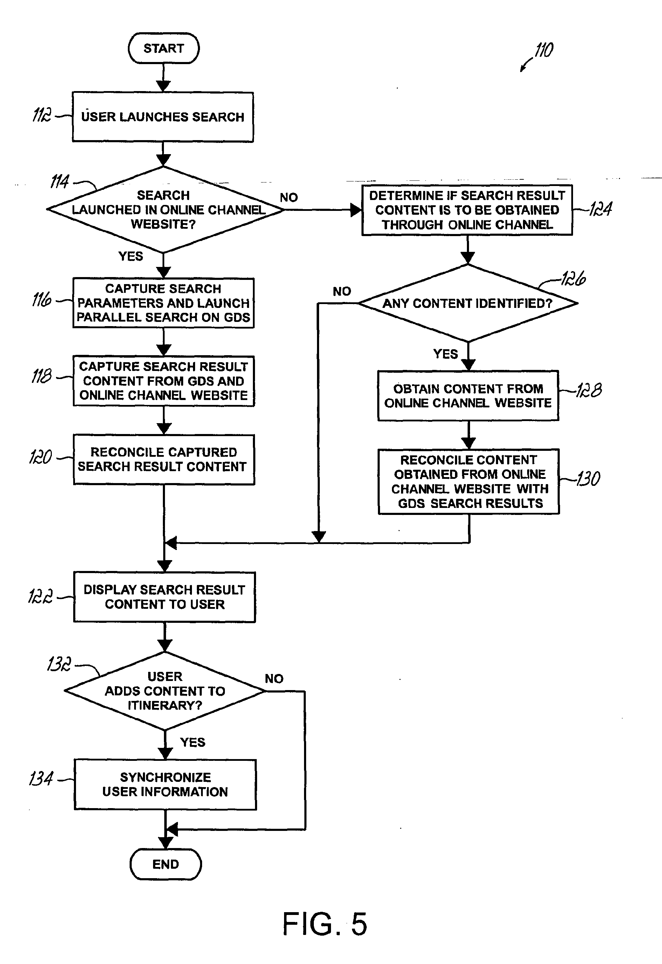

Referring now to FIG. 5, a flow chart illustrates a process 110 by which the user may book travel options via the online channel website, or via the online self-booking tool 52. In block 112, the user launches a search. The search may be launched, for example, by the user entering data into a field displayed by the user application 62 and activating a search button. The data entered by the user may define one or more search parameters, such as an origin/destination city pair, a desired date of travel, and any other parameter that could be used to identify a travel offering which satisfies the itinerary. The user may also enter data that uniquely identifies the user. For example, if the user has a pre-existing account with the online channel website, the user may log into their account using a username and password prior to launching the search.

If the search is launched in the online channel website ("YES" branch of decision block 114), the process may proceed to block 116. In block 116, the search parameters may be captured by the connector module 78 of data siphon tool 54 and transmitted to the profile module 64 of online self-booking tool 52. The connector module 78 may also transmit data identifying the user to the online self-booking tool 52. The online self-booking tool 52 may also require that the user or user application 62 provide data, such as a username and password or security code, before allowing the data siphon tool 54 to access the online self-booking tool 52.

In response to receiving the captured search parameters, the online self-booking tool 52 may launch a parallel search in the GDS 12. This parallel search may identify travel offerings in the corporate travel offerings database 58 and global travel offerings database 60 that satisfy the search parameters. The parallel search may thereby identify corporate travel offerings having negotiated rates, or that are otherwise specific to the user or the corporation for which the user is booking travel. The parallel search may also identify travel offerings generally available through the GDS 12 that satisfy the search parameters. In-response-to identifying travel offerings in one or more of the corporate and global travel offerings databases 58, 60, the GDS 12 may transmit the identified travel options to the results processing module 80 of data siphon tool 54.

In block 118, the results processing module 80 of data siphon tool 54 may capture the search results received from the GDS 12 and the online channel website. In response to the search results being captured by the results processing module 80, the travel booking system 50 may proceed to block 120 and reconcile the captured search results. To this end, the results processing module 80 may apply the relevant travel policies to the combined search results as well as remove any duplicate travel offerings. Travel offerings that are incompatible with the relevant travel policies may also be removed from the search results. In an alternative embodiment of the invention, the incompatible travel offerings may be flagged or otherwise identified. This may enable flagged travel offerings to be displayed with a warning that the flagged travel offering may not comply with corporate travel policies. The user may thereby be put on notice that the corporation may not reimburse the user for the flagged travel offering. In any case, in response to the results processing module 80 reconciling the combined search results, the results processing module 80 may transmit the reconciled search results to the rendering module 82 of data siphon tool 54. The process 110 may then proceed to block 122.

If the search is launched in the online self-booking tool 52 of travel booking system 50 ("NO" branch of decision block 114), the process may proceed to block 124. In block 124, the travel booking system 50 may determine if any of the travel offerings in the search results received from the corporate travel offerings database 58 and global travel offerings database 60 of GDS 12 should be purchased through the online channel. The determination to purchase the travel offering through the online channel may be made, for example, based on a database entry indicating that the travel offering is to be purchased through the online channel. In this way, the online channel may be selected from a plurality of online channels and associated with a specific travel offering. In the event that no search results are received from the corporate and global travel offerings databases 58, 60 of GDS 12, the process 110 may rely exclusively on travel offerings from the online channel. That is, the determination to search for online travel offerings may also be made in response to a lack of travel offerings being returned by the corporate and global travel offerings databases 58, 60 of GDS 12. In any case, if any of the travel offerings are to be purchased through the online channel ("YES" branch of decision block 126), the travel booking system 50 may proceed to block 128.

In block 128, the travel booking system 50 may obtain data from the online channel website corresponding to the online channel through which the identified travel offering is to be purchased. In an embodiment of the invention, this data may define content received from the online channel website in response to a search query transmitted to the online channel website by the connector module 78 of data siphon tool 54. In response to receiving the data from the online channel website, the travel booking system 50 may add the travel offering received from the online channel website to the search results and proceed to block 130.

In block 130, the travel booking system 50 may reconcile the combined search results. In the event only online search results are available (e.g., no search results were received from the corporate and global travel offerings databases 58, 60 of GDS 12), the process of combining the search results from the GDS 12 and third party system 14 may be omitted. In any case, the reconciliation may be performed by the results processing module 80 of data siphon tool 54, which may apply the relevant travel policies to the combined search results and remove any duplicate travel offerings. Similarly as described above with respect to block 120, search results that are incompatible with the relevant travel policies may be removed or flagged. In response to the results processing module 80 reconciling the combined search results, the results processing module 80 may transmit the reconciled search results to the rendering module 82. The process 110 may then proceed to block 122.

In block 122, the travel booking system 50 may cause the content of the reconciled search results to be displayed by the user application 62. To this end, the rendering module 82 of data siphon tool 54 may generate display data based on the reconciled travel offerings to create a display or web page that includes both travel offerings specific to the corporation as well as travel offerings from the online channel. The resulting user interface display may be generated by the rendering module 82, or the rendering module 82 may add or inject specific content into the user interface that is natively rendered by the website. In block 132, the travel booking system 50 may determine if the user has added one or more of the displayed travel offerings to the itinerary. In response to the user adding the travel offering ("YES" branch of decision block 132), the travel booking system 50 may proceed to block 134.

In block 134, the travel booking system 50 may synchronize user information. This synchronization may include centralizing the booking, purchase, and expense data for operations performed through different channels. That is, data relating to travel products purchased through different online channels may be centralized in the travel booking system. This may be the case for purchases made based on search results from the online channel website enriched with content from the GDS 12, as well as purchases made based on search results from the GDS 12 enriched with online channel travel offerings. In an embodiment of the invention, the synchronized data may be stored in the expenses management database 66 of online self-booking tool 52. If the user does not add the travel offering to the itinerary ("NO" branch of decision block 124), the process 110 may terminate.

Embodiments of the invention may facilitate enforcement of corporate travel policies for travel options searched for and purchased through online channels. This feature may reduce the need to develop duplicate services and content from online travel agencies and airline websites in the GDS 12, thereby reducing development and maintenance costs. In addition, users accustomed to searching for and booking travel offerings though online channel websites may avoid adapting to the "offline" channels typically provided by traditional online self-booking tools. The booking process provided by embodiments of the invention may therefore be less disruptive to users than booking processes provided by conventional online self-booking tools lacking this feature. The reduced need to develop duplicate services and content may also reduce time-to-market for new services and content in the travel industry, while increasing compliance with corporate travel policies for travel products booked via online channels.

By providing access to corporate fares while searching online channel websites, embodiments of the invention may also increase the convenience of using online travel agencies or airline websites to look for and book business travel. Corporate travel preferences, programs, and agreements, as well as user preferences and expenses, may be synchronized in a central database so that users can shop for and purchase travel products from multiple third party providers without having to externally track expenses, preferences, or corporate policies.

Enriching online channel travel offerings with corporate travel offerings and displaying them together may increase the user's ability to fully compare alternative travel offerings. Filtering out duplicate and/or irrelevant travel offerings, or identifying displayed travel offerings as failing to comply with corporate travel policy rules, may also reduce the effort needed to evaluate competing offers. The user experience may be further enhanced by modifying and injecting graphical content into the online channel website display, and by communicatin gtravel policy and corporate preferences to the traveler during the selection step. Embodiments of the invention may thereby preserve the user's usual online channel booking experience as much as possible. This feature may also avoid the need for third party providers to develop custom features. That is, the online channel content may be enriched and displayed without any specific actions required by the third party provider. In addition, synchronized online booking, purchase, and expense information may improve policy and cost tracking, and interactivity with users.

Persons having ordinary skill in the art would understand that the program code embodying any of the embodiments of the invention described herein is capable of being individually or collectively distributed as a program product in a variety of different forms. In particular, the program code may be distributed using a computer readable media, which may include computer readable storage media and communication media. Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures, or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

The methods described herein can be implemented by computer program instructions supplied to the processor of any type of computer to produce a machine with a processor that executes the instructions to implement the functions/acts specified herein. These computer program instructions may also be stored in a computer readable medium that can direct a computer to function in a particular manner. To that end, the computer program-instructions may be loaded onto a computer to cause the performance of a series of operational steps and thereby produce a computer implemented process such that the executed instructions provide processes for implementing the functions/acts specified herein.

In addition, program code described herein may be identified based upon the application or software component within which the program code is implemented in a specific embodiment of the invention. However, it should be appreciated that any particular program nomenclature that follows is used merely for convenience, and thus the invention should not be limited to use solely in any specific application identified and/or implied by such nomenclature. It should be further appreciated that the various features, applications, and devices disclosed herein may also be used alone or in any combination. Moreover, given the typically endless number of manners in which computer programs may be organized into routines, procedures, methods, modules, objects, and the like, as well as the various manners in which program functionality may be allocated among various software layers that are resident within a typical computing system (e.g., operating systems, libraries, APIs, applications, applets, etc.), and/or across one or more hardware platforms, it should be appreciated that the invention is not limited to the specific organization and allocation of program functionality described herein.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "composed of", or variants thereof are used in either the detailed description or the claims, such terms are intended to be inclusive in a manner similar to the term "comprising."

According to one aspect in addition to the subject-matter of the following patent claims, the methodologies described herein are characterized by the following points:
1. A method of enriching search results provided to a user with content from a website of a third party provider, the method comprising:
   receiving a search query at a computer in communication with an online self-booking tool;
      identifying, with the computer, a travel offering that satisfies the search query; determining, with the computer, whether the travel offering should be purchased through the website;
      in response to determining the travel offering should be purchased though the website, establishing a link with the website with the computer;
      capturing, at the computer, content transmitted over the link by the website, the content relating to the travel offering;
      searching a first database for a travel policy of a business entity, the travel policy relating to the content; and
      in response to identifying the travel policy of the business entity, displaying the content and the travel policy to the user via the online self-booking tool.
2. The method of point 1 wherein the travel policy of the business entity includes preferences defined by the business entity.
3. The method of point 1 or point 2 further comprising:
   receiving a query at the computer, the query indicating the user wishes to add an element to the travel offering;
   in response to receiving the query, forwarding the query to the website; and
   in response to receiving a response from the website indicating that the element was added to the travel offering, updating a second database,
   wherein the second database provides a centralized repository of travel activities of the user that is synchronized with the website.
4. An apparatus comprising:
   a processor in communication with an online self-booking tool; and
   a memory including instructions that, when executed by the processor, cause the apparatus to:
      receive a search query;
      identify a travel offering that satisfies the search query;
      determine whether the travel offering should be purchased through a website of a third party provider;
      in response to determining the travel offering should be purchased though the website, establish a link with the website;
      capture content transmitted over the link by the website, the content relating to the travel offering;
      search a first database for a travel policy of a business entity, the travel policy relating to the content; and
      in response to identifying the travel policy of the business entity, display the content and the travel policy to the user via the online self-booking tool.
5. A computer program product comprising:
   a non-transitory computer readable storage medium; and
   instructions stored on the non-transitory computer readable storage medium that, when executed by a processor, cause the processor to:
      receive a search query;
      identify a travel offering that satisfies the search query;
      determine whether the travel offering should be purchased through a website of a third party provider;
      in response to determining the travel offering should be purchased though the website, establish a link with the website;
      capture content transmitted over the link by the website, the content relating to the travel offering;
      search a first database for a travel policy of a business entity relating to the content; and
      in response to identifying the travel policy of the business entity, display the content and the travel policy of the business entity to the user via an online self-booking tool.

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to-those skilled in the art. The invention in its broader aspects is therefore not limited to the specific details, representative methods, and illustrative examples shown and described. Accordingly, departures may be made from such details without departing from the spirit or scope of applicant's general inventive concept.

## Claims

1. A method of providing a functionality of an online self-booking tool to a user who is booking travel offerings through a website of a third party provider, the method comprising:
capturing, at a computer, a search criterion contained in a search query transmitted to the website;
launching a first search at the website, the first search including the search criterion;
launching, with the computer, a second search at a first database including travel offerings having a negotiated rate, the second search including the search criterion;
capturing, at the computer, a first set of search results from the website and a second set of search results from the first database;
combining the first and second sets of search results into a third set of search results;
generating a fourth set of search results from the third set of search results by removing duplicate search results; and
displaying at least a portion of the fourth set of search results to the user.

2. The method of claim 1 wherein generating the fourth set of search results comprises:
identifying search results that conflict with a travel policy of a business entity; and
flagging or removing the identified search results.

3. The method of claim 2 further comprising:
retrieving the travel policy of the business entity from a travel policy engine of the online self-booking tool.

4. The method of any of claims 1 to 3 further comprising:
identifying a travel offering that is included in both the first and second sets of search results;
identifying first data in the first set of search results, the first data relating to content displayed by the website, the content relating to the travel offering;
adding second data to the first data to produce third data, the second data being from the second set of search results and related to a characteristic of the travel offering; and
displaying the third data to the user.

5. The method of claim 4 wherein the second data includes a price of the travel offering.

6. The method of any one of claims 1 to 3-further comprising:
transmitting a query to the website from the computer;
receiving, at the computer, a response from the website, the response including first data relating to content displayed by the website;
extracting the first data from the response; and
storing the first data in a second database configured to maintain an inventory of the content displayed by the website.

7. The method of claim 6 wherein the first data includes data that uniquely identifies a travel offering, or data that defines a price of the travel offering.

8. The method of claim 6 or claim 7 further comprising:
retrieving, from one of the first or second databases, second data relating to a business offering, a travel policy status, a policy compliance guideline, a booking flow redirection, or a display setting; and
displaying the second data to the user.

9. The method of any one of claims 1 to 5 further comprising:
determining an identity of the user;
capturing data relating to the user; and
associating the data with the identity of the user in a second database.

10. The method of claim 9 wherein the data relates to a booking, a purchase, or an expense relating to a travel offering, the method further comprising:
synchronizing the data so that the second database provides a centralized repository of travel activities of the user.

11. An apparatus comprising:
a processor; and
a memory including instructions that, when executed by the processor, cause the apparatus to:
capture a search criterion contained in a search query transmitted to a website of a third party provider;
launch a first search at the website, the first search including the search criterion;
launch a second search at a first database including travel offerings having a negotiated rate, the second search including the search criterion;
capture a first set of search results from the website and a second set of search results from the first database;
combine the first and second sets of search results into a third set of search results;
generate a fourth set of search results from the third set of search results by removing duplicate search results; and
display at least a portion of the fourth set of search results.

12. The apparatus of claim 11 wherein the instructions further cause the apparatus to:
identify a travel offering that is included in both the first and second sets of search results;
identify first data in the first set of search results, the first data relating to content displayed by the website, the content relating to the travel offering;
add second data to the first data to produce third data, the second data being from the second set of search results and related to a characteristic of the travel offering; and
display the third data.

13. The apparatus of claim 11 wherein the instructions further cause the apparatus to:
transmit a query to the website;
receive a response from the website, the response including first data relating to content displayed by the website;
extract the first data from the response; and
store the first data in a second database configured to maintain an inventory of the content displayed by the website.

14. A computer program product comprising:
a non-transitory computer readable storage medium; and
instructions stored on the non-transitory computer readable storage medium that, when executed by a processor, cause the processor to:
capture a search criterion contained in a search query transmitted to a website of a third party provider;
launch a first search at the website, the first search including the search criterion;
launch a second search at a first database including travel offerings having a negotiated rate, the second search including the search criterion;
capture a first set of search results from the website and a second set of search results from the first database;
combine the first and second sets of search results into a third set of search results;
generate a fourth set of search results from the third set of search results by removing duplicate search results; and
display at least a portion of the fourth set of search results.
